# FASCICULE DE BREVET EUROPEEN

(11) **EP 0 776 918 B1**
(45) Date de publication et mention de la délivrance du brevet: **12.05.1999**
(21) Numéro de dépôt: 96402567.0
(22) Date de dépôt: 28.11.1996
(51) Int. Cl.: C08G 12/00, D21H 17/51

(54) **Résines d'imprégnation mélamine-formaldéhyde stabilisées et leur procédé d'obtention**
Stabilisierte Melamin-Formaldehyd-Tränkharze und Verfahren zu ihrer Herstellung
Stabilized melamine formaldehyde impregnating resins and process for obtaining same

(30) Priorité: 30.11.1995 FR 9514174
(43) Date de publication de la demande: 04.06.1997
(73) Titulaire: ELF ATOCHEM S.A., 92800 Puteaux, Hauts-de-Seine (FR)
(72) Inventeur: Loussayre, Frédéric, 31240 L'Union (FR); Lalo, Jack, 31400 Toulouse (FR); Garrigue, Roger, 31000 Toulouse (FR)
(74) Mandataire: Rieux, Michel

(56) Documents cités:
- GB-A- 869 184
- GB-A- 1 036 906
- GB-A- 1 040 051
- JOURNAL OF APPLIED POLYMER SCIENCE, vol. 50, no. 4, 1993, NEW YORK US, pages 577-584, XP000464154 NILGÜN KIZILCAN ET ALL.: "Modified Cyclohexanone-Formaldehyde and Acetone- Formaldehyde Resins"

## Description

La présente invention concerne les résines mélamine-formaldéhyde pour l'imprégnation de matériaux supports absorbants tels que le papier, les mats de fibres ou les tissus ; après leur séchage, les matériaux imprégnés peuvent être transformés en stratifiés par une compression à chaud ou utilisés pour le revêtement de surface de matériaux tels que les panneaux ligno-cellulosiques ou pour la fabrication de stratifiés. Ces résines sont obtenues sous la forme de solutions aqueuses par condensation en milieu basique de mélamine et de formaldéhyde.

Pour leur mise en oeuvre, on peut préparer un mélange d'imprégnation constitué par la résine ainsi obtenue en solution aqueuse à laquelle on ajoute un agent de durcissement latent, et, le cas échéant, des adjuvants usuels, tels qu'agents démoulants, agents mouillants, solvants, plastifiants et charges. On peut également utiliser les solutions aqueuses de résines telles quelles.

Les résines mélamine-formaldéhyde doivent être stabilisées. Le caprolactame est le stabilisant généralement utilisé à cet effet.

On est cependant à la recherche de stabilisants susceptibles de remplacer le caprolactame et de conduire à des résines mélamine-formaldéhyde ayant notamment un comportement d'imprégnabilité rehaussé par rapport à celles stabilisées avec ce dernier.

La présente invention permet d'atteindre ces objectifs. Elle a pour objet des résines mélamine-formaldéhyde pour l'imprégnation, ayant un rapport molaire F/NH₂ de 0,45 à 0,60, notamment de 0,45 à 0,55, obtenues sous forme de solutions aqueuses par condensation en milieu basique à une température comprise entre 80 et 120°C jusqu'à un test d'arrêt mesuré au trouble de 20-40°C, de préférence de 25-35°C, en dilution à 2/1 (V/V), ces résines étant caractérisées par le fait qu'elles contiennent de 0,1 à 5% en poids par rapport aux réactifs mélamine et formaldéhyde mis en jeu d'au moins une cétone cyclique saturée en C₄-C₁₂, en particulier en C₅-C₈, en tant que stabilisant.

Comme cétones cycliques intéressantes, on cite la cyclohexanone et, surtout, la cyclooctanone.

La présente invention a également pour objet un procédé de préparation de résines mélamine-formaldéhyde telles que définies ci-dessus, caractérisé par le fait qu'on ajoute au début ou à la fin de la condensation de la mélamine et du formaldéhyde, à une température supérieure à 40°C, de 0,1 à 5% en poids par rapport aux réactifs mélamine et formaldéhyde, d'au moins une cétone cyclique saturée en C₄-C₁₂, en particulier en C₅-C₈ en tant que stabilisant.

Les Exemples suivants illustrent encore la présente invention.

### I - PREPARATION DES RESINES MELAMINE-FORMALDEHYDE

### (a) Mode opératoire général

On condense de manière connue la mélamine avec le formaldéhyde en milieu basique (pH > 8), à une température comprise entre 80°C et 120°C jusqu'à un test d'arrêt mesuré au trouble à la température indiquée en dilution à 2/1 (V/V). Les quantités des réactifs sont ajustées de manière à avoir un rapport molaire F/NH₂ de 0,45 à 0,55 et une teneur en matières actives comprise entre 50 et 70%.

La température de trouble est mesurée de manière classique par dilution de la résine dans l'eau à raison de 1 volume de résine pour 2 volumes d'eau mesurés à la burette, puis ajustement de la température jusqu'au trouble du mélange.

L'addition des agents de stabilisation s'effectue indifféremment au départ ou à la fin à une température supérieure à 40°C.

### (b) Exemples de 1 à 15

Les caractéristiques des différents essais effectués et des résines synthétisées sont rapportées dans les Tableaux 1, 2 et 3 suivants relatifs respectivement aux Exemples 1 à 5 ; 6 à 11 ; et 12 à 15.

TT est le temps de trouble mesuré à l'aide du durcisseur paratoluène sulfonate de morpholine à 50% en solution aqueuse, à raison de 0,5% en poids du durcisseur dans 10 g de résine.

La diluabilité (V/V) est la limite de dilution à l'eau de la résine à 20°C, exprimée en volume d'eau pour 1 volume de résine.

Le formol libre est mesuré selon la norme DIN 16746.

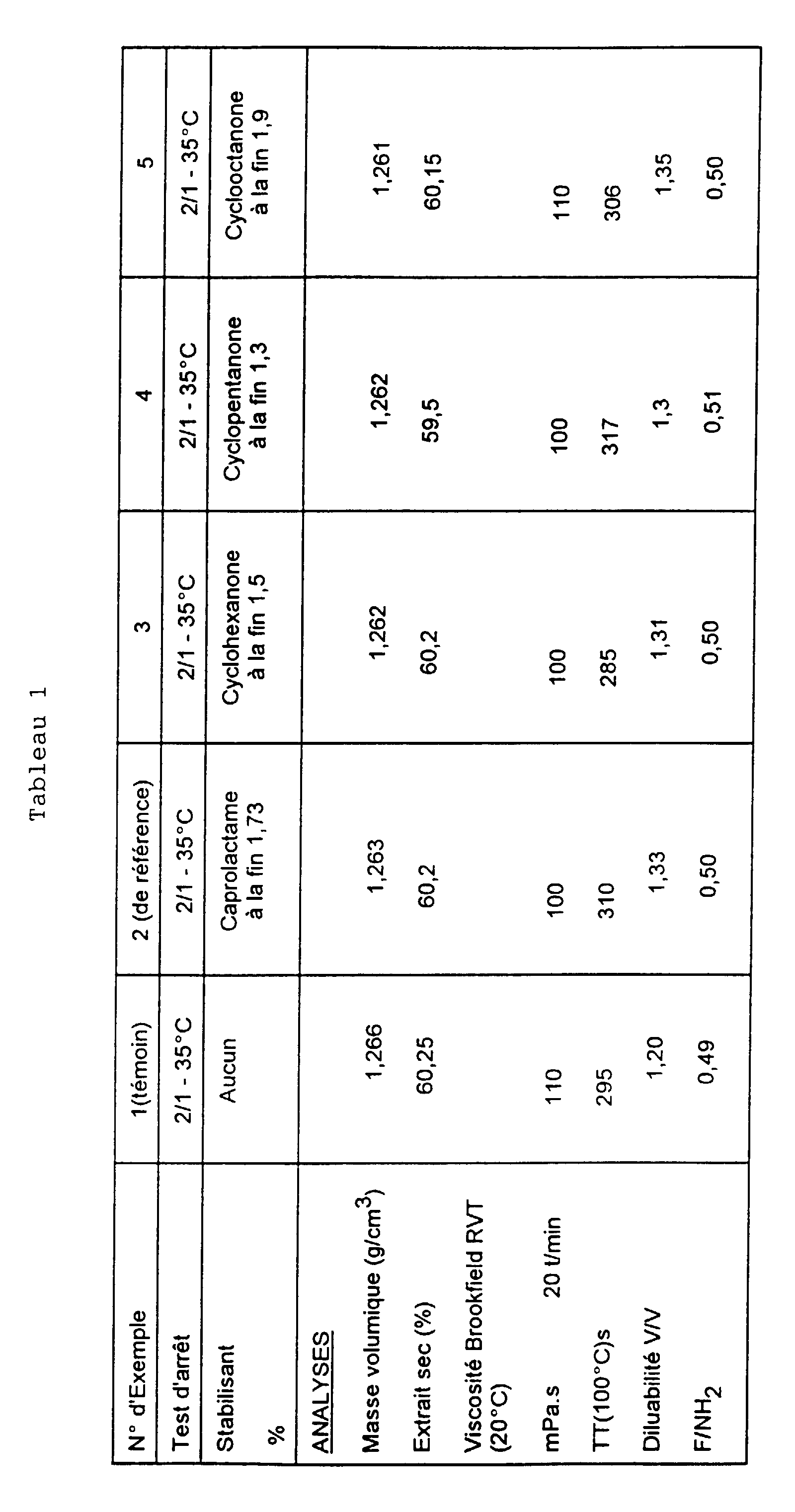

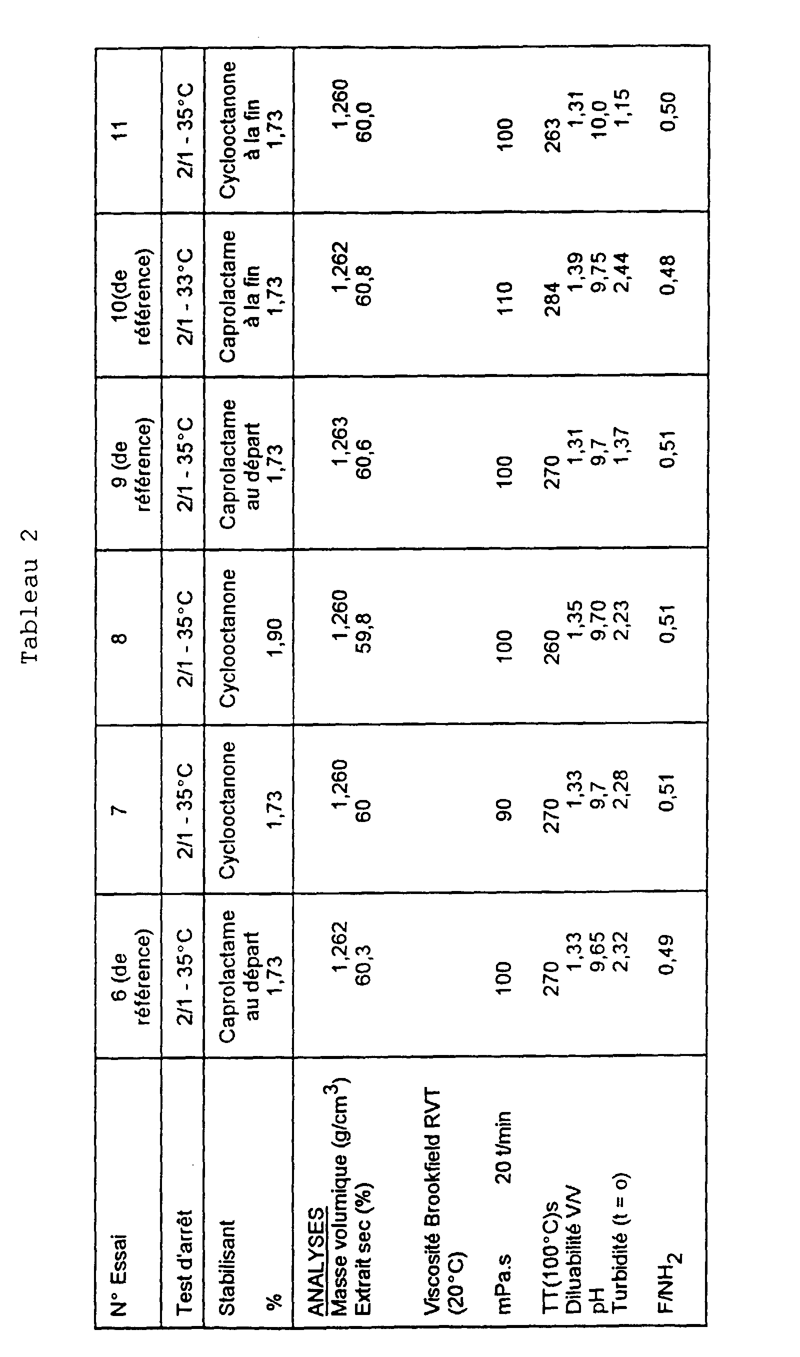

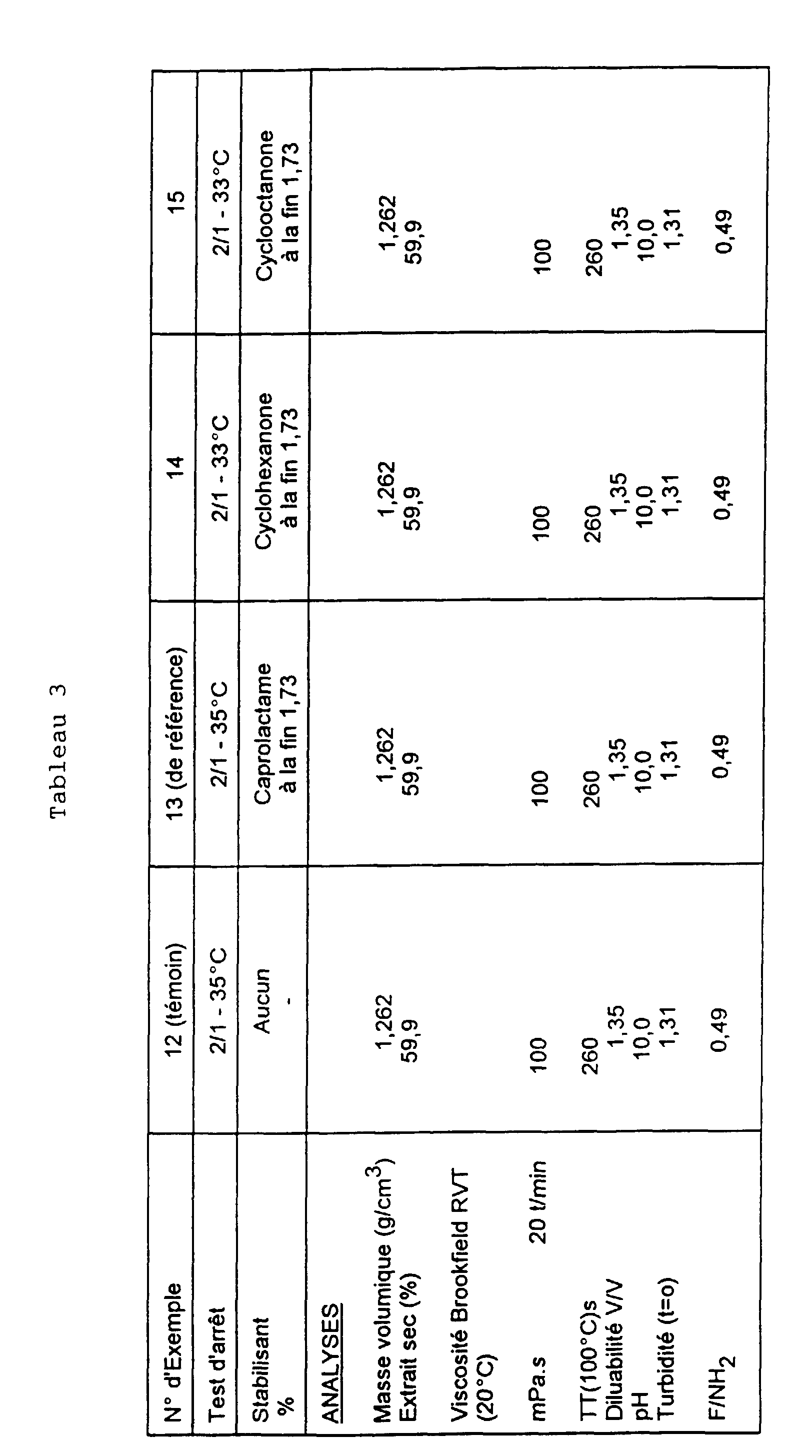

### II - STABILITÉ DES RÉSINES MÉLAMINE-FORMALDÉHYDE AINSI OBTENUES

L'évolution de chacune des résines a été suivie à 20°C.

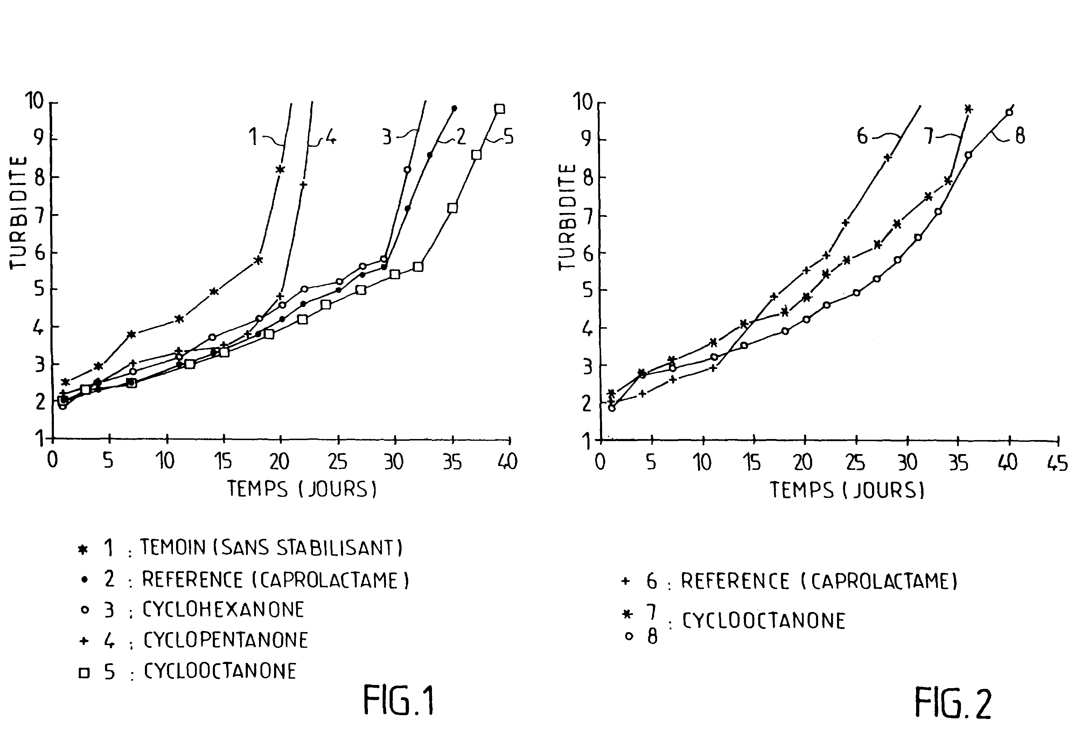

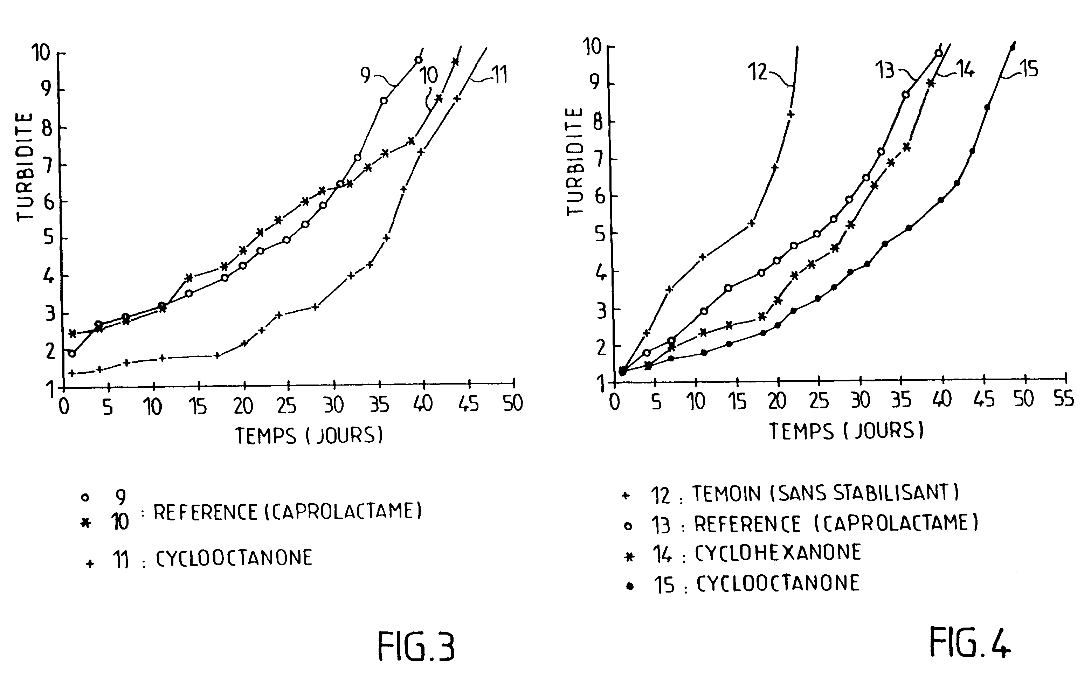

L'apparition du trouble est évaluée au moyen d'un turbidimètre à l'aide duquel sont suivies les variations d'opalescence des résines au cours du temps. Les courbes représentant le phénomène font l'objet des Figures 1 à 4, lesquelles concernant les exemples respectivement 1 à 5 ; 6 à 8 ; 9 à 11 ; et 12 à 15. La valeur de 10 est choisie comme le point d'apparition d'un trouble franc, permettant de considérer que la résine a perdu sa stabilité.

Les mesures sont réalisées dans des tubes en verre borosilicaté de diamètre et épaisseur constants, et un protocole strict est appliqué à chaque mesure : les tubes sont conditionnés à 20°C, fermés par un bouchon. Avant d'effectuer toute mesure, on renverse plusieurs fois les tubes pour homogénéiser la solution de résine, puis on dégaze aux ultrasons avant de faire la mesure au moyen d'un turbidimètre. La mesure est prise lorsque la valeur affichée est constante.

La stabilité moyenne de résines étudiées en fonction des stabilisants employés est rapportée dans le Tableau 4 suivant :

**Tableau 4**

| Stabilisant | Stabilité moyenne des résines étudiées (jours) |
|---|---|
| sans | 20 |
| caprolactame (référence) | 29 |
| cyclopentanone | 24 |
| cyclohexanone | 31 |
| cyclooctanone | 36 |

### III - IMPREGNABILITE VIS-A-VIS DU PAPIER DES RÉSINES MELAMINE-FORMALDÉHYDE AINSI OBTENUES

Afin d'étudier l'influence des stabilisants sur la propriété d'imprégner du papier des résines mélamine-formaldéhyde, une série de mesures du temps de pénétration à travers un papier à imprégner a été réalisée.

Pour cela, on a utilisé un test de pénétration connu, lequel consiste à mesurer le temps de traversée d'une résine à laquelle on a préalablement ajouté de la RHODAMINE (colorant rouge), à travers un papier décor blanc de 80 g/m² utilisé côté surface fermée et repérée et identique pour toute la série préparative, posé à plat sur la surface de la résine.

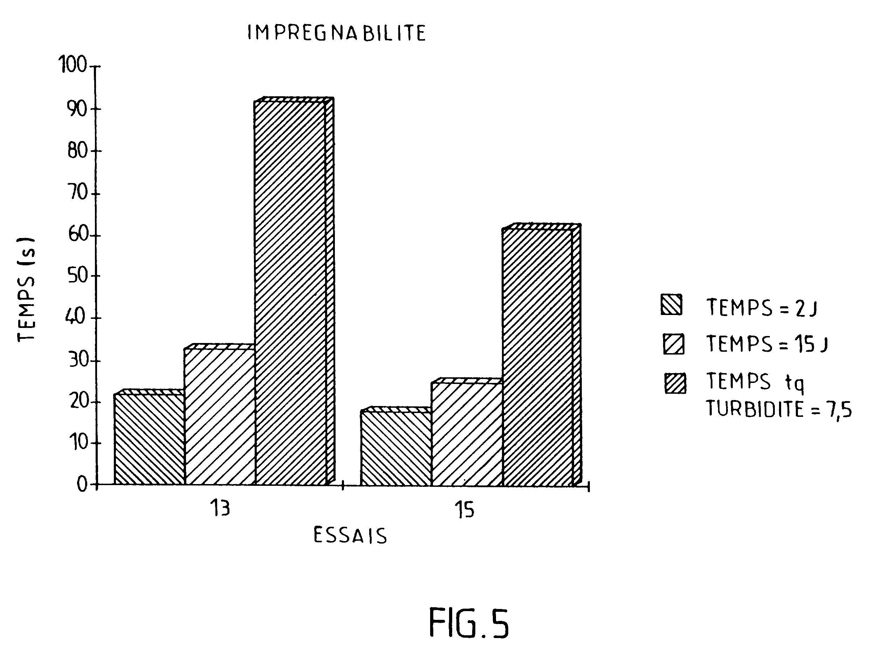

Les résultats obtenus dans chacun des cas étudiés sont rassemblés sur l'histogramme de la Figure 5.

A turbidité égale, une résine stabilisée par la cyclooctanone a un comportement d'imprégnabilité supérieur à celui d'une résine stabilisée par le caprolactame, stabilisant de référence.

## Revendications

1. Résines mélamine-formaldéhyde pour l'imprégnation, ayant un rapport molaire F/NH₂ de 0,45 à 0,60, obtenues sous forme de solutions aqueuses par condensation en milieu alcalin à une température comprise entre 80 et 120°C jusqu'à un test d'arrêt mesuré au trouble de 20-40°C en dilution à 2/1 (V/V), caractérisées par le fait qu'elles contiennent de 0,1 à 5% en poids, par rapport aux réactifs mélamine et formaldéhyde mis en jeu, d'au moins une cétone cyclique saturée en C₄-C₁₂ en tant que stabilisant.

2. Résines selon la revendication 1, caractérisées par le fait que la cétone cyclique saturée est en C₅-C₈.

3. Résines selon la revendication 2, caractérisées par le fait que la cétone cyclique saturée est la cyclohexanone ou la cyclooctanone.

4. Résines selon l'une des revendications 1 à 3, caractérisées par le fait qu'elles ont un rapport molaire F/NH₂ de 0,45 à 0,55.

5. Résines selon l'une des revendications 1 à 4, caractérisées par le fait qu'elles sont obtenues sous forme de solutions aqueuses par condensation en milieu alcalin à une température comprise entre 80 et 120°C jusqu'à un test d'arrêt mesuré au trouble de 25-35°C en dilution à 2/1 (V/V).

6. Procédé de préparation des résines mélamine-formaldéhyde telles que définies à l'une des revendications 1 à 5, caractérisé par le fait qu'on ajoute au début ou à la fin de la condensation, à une température supérieure à 40°C, de 0,1 à 5% en poids par rapport aux réactifs mélamine et formaldéhyde d'au moins une cétone cyclique saturée en C₄-C₁₂ en tant que stabilisant.

7. Procédé selon la revendication 6, caractérisé par le fait que la cétone cyclique saturée est en C₅-C₈.

8. Procédé selon la revendication 7, caractérisé par le fait que la cétone cyclique saturée est la cyclohexanone ou la cyclooctanone.

## Patentansprüche

1. Melamin-Formaldehyd-Harze für Imprägnierzwecke, die ein Molverhältnis F/NH₂ von 0,45 bis 0,60 aufweisen und durch Kondensation in einem alkalischen Medium bei einer Temperatur im Bereich von 80 bis 120 °C bis zu einem Trübungs-Endtest, der bei 20 bis 40 °C bei einer Verdünnung von 2/1 (V/V) durchgeführt wird, in Form wässeriger Lösungen erhalten sind,
dadurch gekennzeichnet, daß
sie als Stabilisierungsmittel mindestens ein gesättigtes cyclisches C₄₋₁₂-Keton in einer Menge von 0,1 bis 5 Gew.-%, bezogen auf das Gewicht der eingesetzten Reaktanten Melamin und Formaldehyd, enthalten.

2. Harze nach Anspruch 1, dadurch gekennzeichnet, daß das gesättigte cyclische Keton ein C₅₋₈-Keton ist.

3. Harze nach Anspruch 2, dadurch gekennzeichnet, daß das gesättigte cyclische Keton Cyclohexanon oder Cyclooctanon ist.

4. Harze nach einem der Ansprüche 1 bis 3, dadurch gekennzeichnet, daß sie ein Molverhältnis F/NH₂ von 0,45 bis 0,55 aufweisen.

5. Harze nach einem der Ansprüche 1 bis 4, dadurch gekennzeichnet, daß sie durch Kondensation in einem alkalischen Medium bei einer Temperatur im Bereich von 80 bis 120 °C bis zu einem Trübungs-Endtest, der bei 25 bis 35 °C bei einer Verdünnung von 2/1 (V/V) durchgeführt wird, in Form wässeriger Lösungen erhalten sind.

6. Verfahren zur Herstellung der Melamin-Formaldehyd-Harze nach einem der Ansprüche 1 bis 5, dadurch gekennzeichnet, daß zu Beginn oder am Ende der Kondensation bei einer Temperatur über 40 °C 0,1 bis 5 Gew.-%, bezogen auf das Gewicht der Reaktanten Melamin und Formaldehyd, mindestens ein gesättigtes cyclisches C₄₋₁₂-Keton als Stabilisierungsmittel zugegeben wird.

7. Verfahren nach Anspruch 6, dadurch gekennzeichnet, daß das gesättigte cyclische Keton ein C₅₋₈-Keton ist.

8. Verfahren nach Anspruch 7, dadurch gekennzeichnet, daß das gesättigte cyclische Keton Cyclohexanon oder Cyclooctanon ist.

## Claims

1. Melamine-formaldehyde resins for impregnation, having an F/NH₂ molar ratio of 0.45 to 0.60, obtained in the form of aqueous solutions by condensation in alkaline medium at a temperature of between 80 and 120°C until a test on stopping judged by the cloudiness at 20-40°C when diluted at 2/1 (V/V), characterized in that they comprise from 0.1 to 5% by weight, with respect to the melamine and formaldehyde reactants involved, of at least one saturated cyclic C₄-C₁₂ ketone as stabilizer.

2. Resins according to Claim 1, characterized in that the saturated cyclic ketone is a saturated cyclic C₅-C₈ ketone.

3. Resins according to Claim 2, characterized in that the saturated cyclic ketone is cyclohexanone or cyclooctanone.

4. Resins according to one of Claims 1 to 3, characterized in that they have an F/NH₂ molar ratio of 0.45 to 0.55.

5. Resins according to one of Claims 1 to 4, characterized in that they are obtained in the form of aqueous solutions by condensation in alkaline medium at a temperature of between 80 and 120°C until a test on stopping judged by the cloudiness at 25-35°C when diluted at 2/1 (V/V).

6. Process for the preparation of the melamine-formaldehyde resins as defined in one of Claims 1 to 5, characterized in that, at the beginning or at the end of the condensation, from 0.1 to 5% by weight, with respect to the melamine and formaldehyde reactants, of at least one saturated cyclic C₄-C₁₂ ketone is added as stabilizer at a temperature of greater than 40°C.

7. Process according to Claim 6, characterized in that the saturated cyclic ketone is a saturated cyclic C₅-C₈ ketone.

8. Process according to Claim 7, characterized in that the saturated cyclic ketone is cyclohexanone or cyclooctanone.
